# EUROPÄISCHE PATENTANMELDUNG

(11) **EP 4 707 473 A1**
(43) Veröffentlichungstag der Anmeldung: **11.03.2026**
(21) Anmeldenummer: 25196351.8
(22) Anmeldetag: 18.08.2025
(51) Int. Cl.: E02F 9/08, B60H 1/22, E02F 9/16

(54) **SELBSTFAHRENDE BAUMASCHINE MIT EINEM KABINENLOSEN FAHRSTAND**

(30) Priorität: 27.08.2024 DE 102024124432
(71) Anmelder: BOMAG GmbH, 56154 Boppard (DE)
(72) Erfinder: RÖHRLE, Philipp, 56154 Boppard (DE); FRENZIUS, Dennis, 56154 Boppard (DE)
(74) Vertreter: Zimmermann & Partner Patentanwälte mbB

(57) **Zusammenfassung**

Die Erfindung betrifft eine selbstfahrende Baumaschine mit einem kabinenlosen Fahrstand. Innerhalb des kabinenlosen Fahrstandes ist wenigstens ein Aufwärmelement vorhanden, welches wenigstens eine Heizeinrichtung und ein mittels konduktiver Wärmeübertragung von der Heizeinrichtung erwärmbares Aufwärmfeld umfasst, um einem innerhalb des Fahrstandes befindlichen Bediener eine Möglichkeit zum Aufwärmen zu geben.

## Beschreibung

Die Erfindung betrifft eine selbstfahrende Baumaschine mit einem kabinenlosen Fahrstand.

Baumaschinen werden häufig im Außenbereich eingesetzt, beispielsweise im Rahmen von Straßen- und/oder Erdbauarbeiten. Typischerweise sind die vorliegend relevanten Baumaschinen selbstfahrend und bewegen sich im Fahr- und Arbeitsbetrieb somit aus eigenem Antrieb. Dazu können die Baumaschinen beispielsweise ein Primärantriebsaggregat, wie beispielsweise einen Verbrennungsmotor und/oder einen Elektromotor, aufweisen, über das die für einen Fahr- und Arbeitsbetrieb der Baumaschine erforderliche Antriebsenergie bereitgestellt wird. Die Bedienung der Baumaschine kann von einem Fahrstand aus erfolgen. In dem Fahrstand kann sich ein Bediener der Baumaschine aufhalten und von dort aus beispielweise über Eingaben an einem oder mehreren Bedienelementen Bedienbefehle zur Bedienung der Baumaschine eingeben bzw. diese steuern.

Es ist bekannt, den Fahrstand derartiger Baumaschinen mit einer sogenannten Fahrerkabine zu umgeben. Fahrerkabinen weisen einen zur Außenumgebung hin abgeschlossenen Innenraum auf und sind auf diese Weise beispielsweise klimatisierbar. Fahrerkabinen bringen allerdings auch Nachteile mit sich, wie beispielsweise erhöhte Produktionskosten der Baumaschine sowie unter Umständen einen deutlich erhöhten Transportaufwand. In der Praxis werden daher häufig auch Baumaschinen mit einem kabinenlosen Fahrstand eingesetzt. Ein kabinenloser Fahrstand im vorliegenden Sinne ist ein Fahrstand, der nicht vollständig von einer Fahrerkabine umhaust ist. Der kabinenlose Fahrstand kann somit zwar durchaus ein oder mehrere Wetterschutzelemente, wie beispielsweise ein Fahrstanddach, eine Frontscheibe, eine Heckscheibe und/oder, insbesondere halbhoch aufragende, Seitenwände umfassen. Ein vollwertiger Wetterschutz kann mit solchen Fahrständen für einen auf dem Fahrstand befindlichen Bediener aber häufig nicht zur Verfügung gestellt werden. Auch wenn derartige kabinenlose Fahrstände somit wenigstens teilweise mit einem potentiell verminderten Bedienkomfort einhergehen, sind sie dennoch auch beim Bediener selbst sehr beliebt, da solche Fahrstände beispielsweise eine vergleichsweise direkte Kommunikation mit im Umfeld der Baumaschine befindlichen weiteren Bedienpersonen gestatten.

Insbesondere bei vergleichsweise niedrigen Außenumgebungstemperaturen kann ein Arbeiten innerhalb eines kabinenlosen Fahrstandes von einem Bediener allerdings als unangenehm empfunden werden, da die, wenn überhaupt vorhandenen, Wandelemente keinen wirksamen Schutz vor niedrigen Temperaturen bieten. In diesem Zusammenhang sind bereits Warmluftgebläse im Stand der Technik beschrieben, die einen mittels eines Gebläses erzeugten Warmluftstrom, beispielsweise erwärmt aus Motorabwärme, in einen Bereich des kabinenlosen Fahrstandes ausblasen. Derartige Warmluftgebläse sind allerdings nicht nur äußerst ineffizient. Der stete mit diesen Heizeinrichtungen einhergehende Luftstrom kann häufig auch als unangenehm empfunden werden.

Hiervon ausgehend ist es die Aufgabe der Erfindung, eine Möglichkeit anzugeben, den Aufenthalt für eine Bedienperson innerhalb eines kabinenlosen Fahrstandes einer Baumaschine bei niedrigen Außenumgebungstemperaturen zu verbessern.

Die Lösung der Aufgabe gelingt mit einer selbstfahrenden Baumaschine gemäß dem unabhängigen Anspruch. Vorteilhafte Weiterbildungen sind in den abhängigen Ansprüchen angegeben.

Die erfindungsgemäße selbstfahrende Baumaschine umfasst demnach einen kabinenlosen Fahrstand. Dies bedeutet mit anderen Worten, dass der Fahrstand kein Gehäuse aufweist, dass diesen vollständig umgibt, und somit keinen gegenüber der Außenumgebung isolierten Kabineninnenraum umfasst. Ein innerhalb des Fahrstandes befindlicher Bediener ist wenigstens zu einem gewissen Maß den Außenumgebungsbedingungen der Baumaschine direkt ausgeliefert. Dies bedeutet nicht, dass der kabinenlose Fahrstand gar keine Wetterschutzeinrichtungen aufweisen kann. Wesentlichen ist, dass keine geschlossene Fahrerkabine von der Baumaschine umfasst ist.

Die selbstfahrende Baumaschine kann einen Maschinenrahmen als wesentliche Tragstruktur aufweisen. Es können ergänzend oder alternativ Fahreinrichtungen von der Baumaschine umfasst sein, wie beispielsweise Räder, Kettenlaufwerke und/oder Walzbandagen. Die Baumaschine kann ein Primärantriebsaggregat aufweisen, das die für den Fahr- und Arbeitsbetrieb der Baumaschine erforderliche Antriebsenergie zur Verfügung stellt. Hierbei kann es sich beispielsweise um einen Verbrennungsmotor und/oder einen Elektromotor handeln. Es können auch mehrere derartige Motoren von der Baumaschine umfasst sein.

Die Baumaschine kann weiter ergänzend oder alternativ eine oder mehrere Arbeitseinrichtungen, insbesondere zur Bearbeitung des Bodenuntergrundes, aufweisen. Hierbei kann es sich beispielsweise um eine oder mehrere Walzbandagen, mit denen der Bodenuntergrund verdichtet und/oder geglättet werden kann, eine oder mehrere Fräswalzen, mit denen der Bodenuntergrund aufgefräst werden kann und/oder ein oder mehrere Zuschlagstoffe mit dem Bodenuntergrund vermengt werden können, eine Einbaubohle, mit der ein Einbaumaterial, wie beispielsweise Asphalt, auf einer Bodenoberfläche verteilt, verdichtet und geglättet werden kann, handeln.

Der Fahrstand bezeichnet einen Bereich der Baumaschine, innerhalb dessen sich ein die Baumaschine bedienender Bediener während des Fahr- und/oder Arbeitsbetriebs der Baumaschine aufhält. Es kann dazu vorgesehen sein, dass der Fahrstand beispielsweise in Vorwärtsrichtung der Baumaschine zwischen vorderen und hinteren Fahreinrichtungen angeordnet ist, wie es beispielsweise häufig bei Straßenfräsen und Straßenwalzen der Fall sein kann. Es kann auch vorgesehen sein, dass der Fahrstand in Vorwärtsrichtung der Baumaschine in einem Heckbereich bzw. auf Höhe hinterer Fahreinrichtungen angeordnet ist, wie es beispielsweise bei Straßenfräsen und Straßenfertigern der Fall sein kann. Sofern vorliegend auf Straßenfertiger Bezug genommen wird, ist dies gleichermaßen auch für sogenannte Beschicker zu verstehen, die anstelle der für Straßenfertiger typischen Einbaubohle eine Fördereinrichtung aufweisen können und in der Regel in Verbindung mit einem oder mehreren Straßenfertigern eingesetzt werden.

Der Fahrstand kann einen Fahrstandboden mit einer Aufstandsoberfläche aufweisen. Der Fahrstandboden bezeichnet somit üblicherweise die in Vertikalrichtung untenliegende Außenoberfläche des Fahrstandes und kann, wenigstens teilweise, beispielsweise im Fahr- und/Arbeitsbetrieb als eine Standfläche für den innerhalb des Fahrstandes befindlichen Bediener dienen. Der Fahrstandboden kann im Wesentlichen plan ausgebildet sein. Der Fahrstandboden kann idealerweise als eine zusammenhängende Fläche ausgebildet sein. Die Aufstandsoberfläche bezeichnet diejenigen Bereiche des Fahrstandbodens, auf denen ein innerhalb der Fahrstandes befindlicher Bediener stehen kann bzw. aus einer Bedienposition heraus die von ihm an den Füßen getragenen Schuhe mit ihren Schuhsohlen auf dem Fahrstandboden abstellen kann.

Der Fahrstand kann wenigstens eine Bedieneinrichtung zur Eingabe von Bedien- bzw. Steuervorgaben durch einen innerhalb des Fahrstandes befindlichen Bediener aufweisen. Eine derartige Bedieneinrichtung kann ein oder mehrere Bedienelemente, wie beispielsweise einen oder mehrere Schalter und/oder Bedienhebel und/oder Joysticks und/oder Lenkräder und/oder Touchscreens oder ähnliches, aufweisen. Das oder die Bedienelemente können gruppiert angeordnet sein, beispielsweise in Form von Bedienpulten mit mehreren Bedienelementen. Es können mehrere derartiger Gruppen von Bedienelementen von der Bedieneinrichtung umfasst sein, beispielsweise eine rechtsseitige Gruppe und eine linksseitige Gruppe, wobei von jeder dieser wenigstens zwei Gruppen an Bedienelementen eine, insbesondere vollständige, Bedienung der Baumaschine möglich sein kann.

Der Fahrstand kann eine oder mehrere Schutzeinrichtungen bzw. Begrenzungen zu den verschiedenen Seiten des Fahrstandes umfassen, ist jedoch aber niemals vollständig im Sinne einer Fahrerkabine umhaust. So kann der Fahrstand beispielsweise in Vertikalrichtung nach oben durch ein Wetterschutzdach begrenzt sein. In Vorwärtsrichtung nach vorn kann der Fahrstand eine oder mehrere Windschutzscheiben bzw. Frontscheiben und/oder in Vorwärtsrichtung nach hinten gesehen eine oder mehrere Heckscheiben aufweisen. Diese können sich in Vertikalrichtung bis zu dem Wetterschutzdach erstrecken. Zur in Vorwärtsrichtung der Baumaschine gesehen rechten und/oder linken Seite kann der Fahrstand durch ein oder mehrere, sich insbesondere in Vertikalrichtung ungefähr hüfthoch erstreckende, Seitenwände und/oder Geländer begrenzt sein, insbesondere auch im Sinne eines Herausfallschutzes. Die genannten Wetterschutzeinrichtungen führen somit im Wesentlichen zu einem Regen-, Sonnen- und/oder Windschutz, schützen aber nicht vor insbesondere niedrigen Außenumgebungstemperaturen.

Der Fahrstand kann ohne Fahrersitz ausgebildet sein. Es ist allerdings auch möglich, den Fahrstand mit einem oder mehreren Fahrersitzen und/oder Sitzbänken auszubilden. Diese können derart ausgebildet sein, dass der innerhalb des Fahrstandes befindliche Bediener aus einer in einem solchen Fahrersitz sitzenden Position heraus die Baumaschine bedienen kann. Der Fahrersitz kann dazu eine Sitzfläche und eine Rücklehne und/oder eine oder mehrere Armlehnen aufweisen. Der oder die Fahrersitze können relativ zu einem Maschinenrahmen der Baumaschine verstellbar sein, beispielsweise mithilfe eines geeigneten Verschiebeschlittens und/oder Schwenkmechanismus und/oder Steckmechanismus.

Teil des Fahrstandes können ergänzend oder alternativ wenigstens eine oder mehrere Hand- und/oder Armauflageoberflächen und/oder Anlehnoberflächen sein.

Eine Handauflagefläche ist insbesondere eine Fläche, die frei von Bedienelementen ist und die beispielsweise in unmittelbarer räumlicher Nähe zu einem oder mehreren Bedienelementen positioniert ist. Die Größe der jeweiligen Handauflagefläche ist idealerweise zumindest etwas größer bemessen, als die Umrissfläche einer durchschnittlich großen Hand, kann somit wenigstens 200cm², insbesondere wenigstens 300cm², betragen. Die Handauflagefläche kann von dem Bediener genutzt werden, um seine Hand zum Abstützen, beispielsweise in einer Stehbedienposition, und/oder Ausruhen bzw. in einer ergonomisch angenehmen Körperhaltung innerhalb der Fahrstandes auf einer Außenoberfläche ablegen und/oder abstützen zu können. Eine solche Handauflageoberfläche kann daher insbesondere ungefähr auf Höhe eines oder mehrerer Bedienelemente innerhalb der Fahrstandes vorgesehen sein und insbesondere vom Bediener aus in Vorwärtsrichtung der Baumaschine gesehen zwischen dem Bediener und dem einen oder den mehreren Bedienelementen und/oder rechts und/oder links von dem einen oder den mehreren Bedienelementen positioniert sein.

Ähnlich verhält es sich mit der Armauflageoberfläche. Diese kann typischerweise größer bemessen sein und beispielsweise eine Fläche von wenigstens 250cm², insbesondere wenigstens 350cm², umfassen und eine längserstreckte Grundfläche aufweisen. Eine solche Armauflageoberfläche kann beispielsweise ebenfalls ungefähr auf Höhe eines oder mehrerer Bedienelemente innerhalb des Fahrstandes vorgesehen sein und/oder insbesondere vom Bediener aus in Vorwärtsrichtung der Baumaschine gesehen zwischen dem Bediener und dem einen oder den mehreren Bedienelementen und/oder rechts und/oder links von dem einen oder den mehreren Bedienelementen positioniert sein. Eine solche Armauflageoberfläche kann auch von einer oder mehreren Oberflächen einer oder mehrerer Armlehnen eines oder mehrerer Fahrersitze gebildet werden, insbesondere einer in Vertikalrichtung oben liegenden Außenoberfläche der jeweiligen Armlehne.

Die Hand- und/oder Armauflageoberflächen können derart ausgebildet sein, dass sie sich jeweils, insbesondere im Wesentlichen, in einer horizontalen Ebene erstrecken. Häufig kann eine Handauflageoberfläche auch gleichzeitig eine Armauflageoberfläche sein.

Eine Anlehnoberfläche bezeichnet dagegen eine Außenoberfläche des Fahrstandes, an die sich ein innerhalb des Fahrstandes der Baumaschine befindlicher Bediener aus einer Stehbedienposition mit seinem Körper, insbesondere im Bereich seiner Oberarme und/oder Oberschenkel und oder seines Rückens und/oder seiner Rumpfvorderseite, anlehnen kann. Eine Rückenlehne und eine Sitzfläche eines möglicherweise vorhandenen Fahrersitzes stellt daher auch keine Anlehnoberfläche im Sinne der vorliegenden Erfindung dar.

Es versteht sich, dass die tatsächlich im Fahrstand vorgesehenen Flächen auch ergänzend oder alternativ derart ausgebildet und/oder positioniert sein können, dass sie gleichzeitig als Hand- und Armauflageoberflächen und/oder als Hand- und/oder Armauflagefläche und Anlehnoberflächen von einem innerhalb des Fahrstandes befindlichen Bediener genutzt werden können.

Erfindungsgemäß kann es nun vorgesehen sein, dass ein Aufwärmelement vorhanden ist, welches wenigstens eine Heizeinrichtung und ein mittels konduktiver Wärmeübertragung von der Heizeinrichtung erwärmbares Aufwärmfeld umfasst, wobei das wenigstens eine Aufwärmfeld mit seiner Außenoberfläche wenigstens einen Teil der Hand- und/oder Armauflageoberfläche und/oder der Aufstandsoberfläche und/oder der Anlehnfläche innerhalb des Fahrstandes bildet. Um den Bedienkomfort eines innerhalb des Fahrstandes befindlichen Bedieners zu erhöhen, schlägt die Erfindung somit vor, dass selektiv eine oder mehrere Oberflächen aus der Gruppe der Hand- und/oder Armauflageoberflächen und/oder der Aufstandsoberfläche und/oder der Anlehnfläche innerhalb des Fahrstandes mittels wenigstens einer Heizeinrichtung flächig erwärmt wird. In Abkehr von üblichen Warmluftgebläsen richtet sich die Erfindung damit nicht darauf, eine gezielte Luftströmung mittels eines Heizgebläses zu erzeugen, sondern in Abkehr davon eine oder mehrere spezielle und vom Bediener innerhalb des Fahrstandes bequem erreichbare Wärmeoberflächen, wie vorstehend erwähnt, vergleichbar einer Wärmeplatte, aufzuheizen. Diese Wärmeoberflächen werden vorliegend auch als Aufwärmfeld bzw. Aufwärmfelder bezeichnet. Anders als bei konventionellen Warmluftgebläsen tritt ein wesentlicher Aufwärmeffekt für den Bediener somit durch ein Berühren bzw. Kontaktieren des Aufwärmfeldes auf und ist damit lokal vergleichsweise begrenzt. Dennoch kann er dadurch zumindest bestimmten Arealen seines Körpers, wie beispielsweise seinen Extremitäten, ganz besonders beispielsweise seinen Händen, Wärme zuführen bzw. diese zumindest übergangsweise im Arbeitsprozess aufwärmen.

Dazu ist es erfindungsgemäß nun vorgesehen, dass auf eine konduktive Wärmeübertragung zwischen dem die Wärme tatsächlich generierenden Heizelement und der oder den jeweiligen, das oder die Aufwärmfelder umfassenden Oberflächen zurückgegriffen wird. D.h., dass insbesondere zwischen dem Heizelement und dem die Aufwärmfläche bildenden Material ein Wärmefluss zwischen einem oder mehreren Feststoffen erfolgt und gerade nicht ein im Wesentlichen konvektiver Wärmetransport. Für den Bediener besteht durch die eine oder die mehreren Aufwärmflächen die Möglichkeit, diese durch Berührung, beispielsweise mit der Hand, dem Arm und/oder einer zum Anlehnen genutzten Körperregion und/oder durch Stehen auf einer solchen Aufwärmfläche, zum Aufwärmen zu nutzen, wobei hier dann ebenfalls eine im Wesentlichen auf einem konduktiven Transportvorgang beruhende Wärmeübertragung erfolgt. Es hat sich gezeigt, dass der damit erreichbare Aufwärmprozess für einen signifikanten Komfortgewinn für den Bediener bereits ausreichend sein kann, wenn er eine, wenn auch lokal begrenzte, Aufwärmgelegenheit für beispielsweise seine Extremitäten zur Verfügung hat, wie beispielsweise seine Hände. Insbesondere bei Arbeiten unter kalten Außenumgebungsbedingungen ist der Bediener der Baumaschine häufig bereits zu großen Teilen vergleichsweise warm angezogen. Die Nutzung von beispielsweise Handschuhen wird aber von Bedienern der Baumaschine in vielen Fällen gescheut, da beispielsweise die Bedienelemente durch dicke Handschuhe nur vergleichsweise unpräzise bedienbar sein können oder, insbesondere beispielsweise im Fall eines berührungssensitiven Bildschirms bzw. Touchscreens, gar nicht auf manuelle Bedieneingaben ansprechen. Ähnlich kann es sich beispielsweise mit dem Fahrstandboden bzw. der Aufstandsfläche des Fahrstandbodens verhalten. Auch wenn der Bediener hier die beispielsweise von einem Fahrstandboden umfasste Aufwärmfläche durch Schuhe bzw. Schuhsohlen im Vergleich zu seinen Händen nicht unmittelbar körperlich kontaktiert, kann insbesondere bei einem Stehen auf einer derartigen Aufwärmfläche über einen längeren Zeitraum eine spürbare und auch ausreichende Wärmeübertragung von der Aufwärmfläche in das Innere der Schuhe erfolgen. Weiter ergänzend oder alternativ können auch Flächen genutzt werden, an die sich der innerhalb des Fahrstandes befindliche Bediener in einer Stehbedienposition anlehnt und/oder auf die er seine Arme oder zumindest einen Teil derselben, wie insbesondere einen oder beide Unterarme, ablegt.

Abweichend zu üblichen Warmluftgebläsen schlägt die Erfindung somit das gezielte Erwärmen bestimmter Oberflächenareale des Fahrstandes von innen heraus vor, so dass für den Bediener ein oder mehrere Aufwärmflächen bereitgestellt werden, die er durch körperliches Kontaktieren zur eigenen Erwärmung nutzen kann. Auch wenn dieser Prozess gegenüber einem Warmluftgebläse träger ist, kann damit dennoch ein effektiver Komfortgewinn für den innerhalb des Fahrstandes befindlichen Bediener mit einem gleichzeitig vergleichsweise einfachen apparativen Aufwand geschaffen werden.

Bei der Heizeinrichtung kann es sich insbesondere um eine elektrische Heizeinrichtung handeln. Eine elektrische Heizeinrichtung kann sich dadurch auszeichnen, dass sie elektrischen Strom bzw. elektrische Energie in Wärme umwandelt und vorliegend mittels Konduktion überträgt.

Die Betriebsbedingungen der elektrischen Heizeinrichtung sind variabel. So kann es beispielsweise vorgesehen sein, dass eine elektrische Energieversorgung von der Baumaschine umfasst ist, die die Heizeinrichtung mit elektrischer Energie versorgt. Eine solche elektrische Energieversorgung kann beispielsweise eine von der Baumaschine mitgeführte elektrische Batterie, insbesondere ein Akkumulator, und/oder ein Bordnetz der Baumaschine sein, über das auch weitere elektrische Energieverbraucher, wie beispielsweise eine Beleuchtung, eine Maschinensteuerung etc., mit elektrischer Energie versorgt werden. Es kann vorgesehen sein, dass die elektrische Heizeinrichtung mit elektrischer Energie im Bereich von 12V bis 48 V bei anliegender Gleichspannung oder 110V bis 240V bei anliegender Wechselspannung versorgt wird.

Ergänzend oder alternativ kann es vorgesehen sein, dass die Heizeinrichtung oder das Aufwärmelement insgesamt als Folienelement ausgebildet sind. Ein Folienelement bezeichnet vorliegend insbesondere ein flaches bzw. vergleichsweise dünn ausgebildetes Flächenelement, beispielsweise mit einer maximalen Dicke von 3 mm, insbesondere maximal 2 mm. Das Folienelement kann zudem zerstörungsfrei, insbesondere elastisch oder plastisch, zumindest bei bestimmungsgemäßer Verwendung innerhalb eines bestimmten Bereiches, verformbar sein. So kann es insbesondere aus einer praktisch planen Ausgangsform heraus verbiegbar sein. Aufgrund der geringen Dicke und/oder der Verformbarkeit ist es möglich, die Heizeinrichtung oder das Aufwärmelement vergleichsweise einfach in einem Fahrstand anzuordnen, da einerseits der Platzbedarf vergleichsweise gering ist und andererseits auch dreidimensional verformte Oberflächenbereiche, insbesondere auch eines bestehenden Fahrstandes, zum Anbringen der Heizeinrichtung oder des Aufwärmelementes genutzt werden können bzw. die Heizeinrichtung oder das Aufwärmelement an bestehende Oberflächenstrukturen angepasst werden kann. Eine Heizfolie im vorliegenden Sinne nutzt insbesondere die Wärme, die sich aufgrund einer elektrischen Verlustleistung in einem von Strom durchflossenen Leiter, der in die Folie eingebracht ist, entwickelt. Die dabei entstehende Wärme kann vorliegend, insbesondere direkt und ausschließlich, konduktiv bzw. mittels eines konduktiven Wärmetransportes auf den zu heizenden Körper, wie nachstehend noch näher beschrieben, übertragen werden.

Idealerweise ist das Aufwärmelement der Heizeinrichtung mehrschichtig aufgebaut. Jede Schicht kann eine oder mehrere Funktionen haben. Bevorzugt ist es beispielsweise, wenn eine Schicht des Aufwärmelementes, insbesondere die das Aufwärmfeld an sich bildende Schicht, eine die Außenoberfläche bildende Wärmschicht ist. Die Wärmschicht oder auch Kontaktschicht ist somit diejenige Schicht, die von einem Bediener zu Aufwärmzwecken an ihrer Außenoberfläche unmittelbar kontaktiert werden kann. Es kann bevorzugt sein, wenn die Wärmschicht aus einem vergleichsweise weichen Material ausgebildet ist, um ein angenehmes Berührungsgefühl an den Bediener zu vermitteln, insbesondere dann, wenn der Bediener eine Hand auf dieser Außenoberfläche ablegt. Insbesondere unterhalb der Kontaktschicht kann das Aufwärmelement eine Heizschicht aufweisen. Die Heizschicht bezeichnet diejenige Schicht, in der der, insbesondere direkt aus elektrischer Energie, Wärme erzeugende und mittels konduktiver Wärmeübertragung, insbesondere an die Kontaktschicht, abgebende Teil der Heizeinrichtung angeordnet ist. Dazu kann es beispielsweise vorgesehen sein, dass die Heizschicht ein Einbettungsmaterial oder Grundmaterial umfasst, in das mehrere Metalldrähte, insbesondere beispielsweise Kupferbänder, ganz besonders der elektrischen Heizeinrichtung, eingebettet sind. Die Heizschicht stellt somit die Wärme erzeugende Schicht des Aufwärmelementes dar. Schließlich kann es weiter ergänzend oder alternativ vorgesehen sein, dass das Aufwärmelement eine, insbesondere unter der Heizschicht, verlaufende Verbindungsschicht aufweist. Die Verbindungsschicht bezeichnet insbesondere diejenige Schicht, über die das Aufwärmelement körperlich mit dem übrigen Fahrstand verbunden ist.

Die Heizschicht kann beispielsweise eine oder mehrere Leiter, insbesondere Leitbahnen, ganz besonders mäanderförmig verlaufende Leiterbahnen, umfassen. Diese können beispielsweise aus Kupfer oder Silber bestehen und/oder in einer Tragschicht aus einem Kunststoffmaterial eingebettet sein. Bei der Kontaktschicht und/oder der Verbindungsschicht kann es sich insbesondere beispielsweise um eine oder mehrere Schichten aus einem Kunststoffmaterial handeln, beispielsweise einem Polyethylen- und/oder einem Polyurethankunststoff.

Es ist vorteilhaft, wenn die Wärmschicht aus einem, insbesondere elastisch verformbaren und/oder wasserabweisenden und/oder UV-beständigen, Kunststoffmaterial besteht. Aufgrund des Umstandes, dass der Fahrstand kabinenlos ausgebildet ist, kann auch das Aufwärmelement, zumindest mit seiner außenliegenden Oberfläche, Witterungseinflüssen, wie beispielsweise einer Sonneneinstrahlung und/oder Regen, ausgesetzt sein. Insofern ist es vorteilhaft, zumindest für die Ausbildung der Wärmschicht auf Kunststoffmaterialien zurückzugreifen, die diesen Witterungseinflüssen gegenüber widerstandsfähig sind. Ein Rückgriff auf ein elastisch verformbares Kunststoffmaterial kann die Installation erleichtern und/oder eine Formgebung bzw. dreidimensionale Verformung der Wärmschicht an ihrer Außenoberfläche ermöglichen, die beispielsweise komplementär an eine Hand angepasst bzw. an diese angenähert ist. Auf diese Weise kann auch eine mechanisch-taktile Rückmeldung an den Bediener erreicht werden, dass der seine Hand gerade in einem Bereich des Aufwärmelementes abgelegt hat.

Auch hinsichtlich der konkreten Ausbildung der Verbindungsschicht bestehen verschiedene Variationsmöglichkeiten. Beispielsweise kann die Verbindungsschicht als Haftseite (Widerhaken) oder als Flauschseite (Schlaufen) einer Klettverbindung ausgebildet sein. Auf diese Weise ist eine vergleichsweise schnelle und gleichzeitig reversible Befestigung des Aufwärmelementes innerhalb der Fahrstandes und/oder im Wechsel ein und desselben Aufwärmelementes an verschiedenen Stellen des Fahrstandes möglich. Ergänzend oder alternativ ist es aber auch möglich, dass die Verbindungsschicht ein oder mehrere Magnetelemente aus einem permanentmagnetischen Material und aus einem magnetischen Material umfasst, so dass die Verbindungsschicht beispielsweise Teil einer Magnetverbindung mit einem entsprechenden Befestigungsbereich innerhalb des übrigen Fahrstandes ist. Dies kann insbesondere insofern vorteilhaft sein, als dass in bereits bestehenden kabinenlosen Fahrständen häufig bereits metallische und magnetische Bereiche vorhanden sind, beispielsweise als Teil des Maschinenrahmens, als Teil einer Schutzstruktur, wie beispielsweise einem Überrollbügel (ROPS bzw. *roll over protection structure*) und/oder einem Geländer, oder als Teil eines Bedienpultes. Darüber hinaus kann ein Vorteil einer Magnetverbindung ebenfalls darin bestehen, dass diese vergleichsweise einfach lösbar und wiederherstellbar ist. Es kann weiter ergänzend oder alternativ vorgesehen sein, dass die Verbindungsschicht schließlich als Klebschicht ausgebildet ist. Dies ist insbesondere dann sinnvoll, wenn das oder die Aufwärmelemente fest innerhalb des Fahrstandes installiert werden sollen.

Das Aufwärmelement kann als separat zur übrigen Baumaschine handhabbares Aufwärmmodul ausgebildet sein. Dies bedeutet, dass das Aufwärmelement, insbesondere inklusive seiner Heizeinrichtung sowie der oder den das Aufwärmfeld bildenden Komponenten, als zusammenhängende Funktionseinheit ausgebildet sein kann, die auf diese Weise vergleichsweise einfach beispielsweise nachgerüstet werden kann. Hierbei kann es vorgesehen sein, dass dieses Aufwärmmodul eine eigene elektrische Energieversorgung mit umfasst. Es ist aber auch möglich, dass Aufwärmmodul derart auszubilden, dass es, insbesondere über eine lösbare und elektrische Energie übertragende Steckverbindung, die zur Herstellung einer Energieübertragungsverbindung von einem Bordnetz der Baumaschine zum Aufwärmelement, ausgebildet ist, an eine bestehende elektrische Energieversorgung der Baumaschine angeschlossen wird, wie beispielsweise das Bordnetz der Baumaschine. Insofern kann in diesem Fall von dem Aufwärmelement ein Teil der Steckverbindung und von der übrigen Baumaschine ein anderer Teil der Steckverbindung umfasst sein.

Es ist möglich, dass das wenigstens eine Aufwärmfeld hinsichtlich seiner Außenoberfläche eben oder gekrümmt ausgebildet ist. Eine ebene Ausbildung ermöglicht in der Regel einen vergleichsweise einfachen Montageprozess. Zudem stehen in einem Fahrstand der vorliegenden Art häufig ausreichend ebene Flächen zur Verfügung, die als potentielle und von ihrer Lage her auch sinnvolle Anordnungsstellen für die Anordnung eines oder mehrerer Aufwärmfelder in Frage kommen. Ergänzend oder alternativ kann es aber auch vorgesehen sein, dass das wenigstens eine Aufwärmfeld hinsichtlich seiner Außenoberfläche gekrümmt bzw. dreidimensional verformt ausgebildet ist. Dies erlaubt beispielsweise die Nutzung nicht-planer Flächen innerhalb des Fahrstandes als Tragstrukturen für ein oder mehrere Aufwärmfelder sowie ergänzend oder alternativ auch eine vorteilhafte dreidimensionale Verformung des Aufwärmfeldes an sich, beispielsweise als Mulde, Hohlstruktur oder ähnliches.

So ist es auch möglich und von der Erfindung mit umfasst, wenn das Aufwärmfeld des Aufwärmelementes Teil einer Außenoberfläche einer Aufwärmmulde und/oder eines Aufwärmfachs ist, insbesondere als Teil eines Armaturenbrettes, Bedienpultes oder einer Lehne eines Fahrersitzes. Eine Aufwärmmulde zeichnet sich vorliegend dadurch aus, dass sie eine von wenigstens zwei ihrer gegenüberliegenden Ränder gegenüber der angrenzenden Außenoberfläche einsinkende Außenoberfläche aufweist, so dass beispielsweise eine Art wannen- oder trogartige Oberflächenstruktur erhalten wird. Die Aufwärmmulde ist somit eine Oberflächenvertiefung gegenüber an die Aufwärmmulde angrenzenden Bereichen. Ein Aufwärmfach zeichnet sich dagegen dadurch aus, dass es eine sacklochartige oder tunnelartige Hohlstruktur, insbesondere einen ausschließlich zu einer Seite oder ausschließlich zu zwei einander gegenüberliegenden Seiten zur Außenumgebung geöffneten Hohlraum, umfasst. Der Innenraum dieses Hohlraums kann durch ein oder mehrere Aufwärmfelder ausgekleidet sein. Auf diese Weise gelingt es, trotz des eingangs angegebenen konduktiven Wärmeleitprozesses einen lokal begrenzten Raum zu schaffen, der gleichzeitig auf mehreren Seiten angewärmte Flächen aufweisen kann. Dies kann beispielsweise eine Art Aufwärmfach sein, in welches ein innerhalb des Fahrstandes befindlicher Bediener zu Aufwärmzwecken eine oder beide seiner Hände, ggf. inklusive zumindest seiner Unterarme, und/oder seine Füße bzw. Schuhe, zumindest übergangsweise und idealerweise zudem windgeschützt hineinhalten und/oder ablegen kann.

Es ist möglich, dass die Bedieneinrichtung ein Bedienpult ist, und dass ein Teil einer Außenoberfläche des Bedienpultes und/oder ein Teil einer an das Bedienpult angrenzenden Außenoberfläche von der Außenoberfläche des Aufwärmelementes gebildet wird. Insbesondere kann die Bedieneinrichtung ein, insbesondere gegenüber einem Maschinenrahmen der Baumaschine relativ verstellbares, Bedienpult mit einem ein oder mehrere Bedienelemente umfassenden Bedienfeld aufweisen, das, wie vorstehend erwähnt, mit einem oder mehreren Aufwärmelementen ausgestattet sein kann.

Es kann ergänzend vorgesehen sein, dass einzelne oder mehrere der Bedienelemente an sich ebenfalls mittels einer oder mehrerer Heizeinrichtungen erwärmbar ist.

Ergänzend oder alternativ ist es auch möglich, dass eine den Fahrstand begrenzende Sturzsicherung vorhanden ist, und dass ein Teil einer dem Fahrstand zugewandten Außenoberfläche der Sturzsicherung von der Außenoberfläche des Aufwärmelementes gebildet wird. Eine solche Sturzsicherung kann beispielsweise ein Geländer und/oder ein Seitenwand-Frontwand- und/oder Rückwandelement sein, insbesondere auch umfassend eine oder mehrere Türen. Je nach Baumaschinen treten hierbei häufig Situationen auf, in denen ein innerhalb des Fahrstandes befindlicher Bediener, insbesondere in eine Fahrrichtung der Baumaschine gesehen, seitlich entlang einer Außenwand der jeweiligen Baumaschine entlangblicken möchte. Dies ist beispielsweise regelmäßig bei Straßenbaumaschinen der Fall, bei denen häufig Arbeitsprozesse auftreten, die entlang seitlich in Arbeitsrichtung verlaufender Begrenzungen erfolgen, wie beispielsweise Randsteine, Gebäude, Frässpuren, Belagsmatten und/oder Walzspuren. In solchen Fällen lehnt ein Bediener häufig einen Teil seines Oberkörpers aus dem Fahrstand heraus und stütz sich dazu mit einem Teil seines Körpers durch Anlehnen an einer Sturzsicherung oder ähnliches ab. Insofern kann es sehr angenehm für den Bediener sein, wenn dieser Anlehnbereich von einem oder mehreren Aufwärmelementen erwärmt wird.

Wie vorstehend bereits erwähnt, ist es möglich, dass ein oder mehrere Fahrersitze innerhalb des Fahrstandes angeordnet sind. Bevorzugt ist es, wenn der oder die Fahrersitze jeweils wenigstens eine Hand- und/oder Armauflageeinrichtung umfassen. Dies kann beispielsweise eine Armlehne sein. In diesem Fall kann es vorteilhaft sein, wenn ein Teil einer in Vertikalrichtung oben liegenden Außenoberfläche der Hand- und/oder Armauflageeinrichtung von der Außenoberfläche des Aufwärmelementes gebildet wird. Da im laufenden Arbeitsbetrieb der Arm eines Bedieners, sofern denn eine Armlehne vorhanden ist, auf eine solchen Armlehne abgelegt wird, kann auch durch vergleichsweise dicke Kleidung hindurch ein effektiver Aufwärmeffekt für den Bediener erreicht werden.

Es ist besonders vorteilhaft, wenn das wenigstens eine Aufwärmfeld eine visuell und/oder taktil wahrnehmbare Markierung aufweist. Eine visuell wahrnehmbare Markierung kann beispielsweise eine Farbmarkierung sein. Eine taktil wahrnehmbare Markierung kann beispielsweise eine Oberflächenstruktur bzw. eine gegenüber einer an das Aufwärmfeld angrenzenden Außenoberfläche im Bereich des Aufwärmfeldes geänderte Oberflächenstruktur, beispielsweise auch eine glatte Oberfläche, sein. Insbesondere kann es bevorzugt sein, wenn die Markierung in einer wenigstens einen Außenrand des oder der Aufwärmfelder umlaufenden oder an diesem entlang verlaufenden Weise ausgebildet ist. Dies erleichtert es dem Bediener, zu ermitteln, wo sich das oder die Aufwärmfelder konkret befinden.

Grundsätzlich ist es möglich, dass das Aufwärmelement derart ausgebildet ist, dass es sich bis hin zu einer Solltemperatur erwärmt oder mit einem konstanten Energieverbrauch betrieben wird. Es kann aber auch vorgesehen sein, dass das Aufwärmelement derart ausgebildet ist, dass eine Solltemperatur des Aufwärmelementes schrittweise oder stufenlose verstellbar bzw. einstellbar ist. Dies ermöglicht es beispielsweise auf verschiedene individuelle Bedürfnisse verschiedener Benutzer oder auch verschiedene Außenumgebungstemperaturen zu reagieren. Dazu ist es möglich, dass das Aufwärmelement ein oder mehrere geeignete Bedienelemente umfasst, über die ein Bediener entsprechende Vorgaben eingeben kann.

Es kann vorgesehen sein, dass eine Steuereinheit vorhanden ist, die derart ausgebildet ist, dass sie die Temperatur des Aufwärmelementes in Abhängigkeit von einer vorgegebenen Solltemperatur regelt. In diesem Fall kann das Aufwärmelement somit insbesondere auch einen Temperatursensor umfassen, der eine aktuelle Ist-Temperatur des Aufwärmelementes ermittelt und anhand der ermittelten Ist-Temperatur entsprechende Regelungseingriffe zum Erhalt der Solltemperatur des Aufwärmelementes regelt. Ergänzend oder alternativ ist es möglich, dass die Steuereinheit derart ausgebildet ist, dass sie die Temperatur des Aufwärmelementes in Abhängigkeit von einer durch den Bediener vorgegebenen und variierbaren Solltemperatur regelt. Weiter ergänzend oder alternativ ist es möglich, dass die Steuereinheit derart ausgebildet ist, dass sie die Temperatur des Aufwärmelementes in Abhängigkeit von einem Betriebs- und/oder Umgebungsparameter der Baumaschine regelt. Betriebsparameter der Baumaschine können beispielsweise eine Aktivierung/Deaktivierung eines Bordnetzes und/oder eines Standbymodus und/oder eines Arbeitsmodus der Baumaschine, ein Arbeits- und Rangierbetrieb der Baumaschine und/oder ein Notbetrieb der Baumaschine, bei dem der Betrieb der Baumaschine in nur einem beschränkten Umfang zur Verfügung steht, sein. Diesen einzelnen Betriebsparameter können verschiedene Betriebszustände des Aufwärmelementes zugewiesen werden. Beispielsweise ist es vorteilhaft, wenn das Aufwärmelement in einem Notbetrieb deaktiviert wird. In einem Standbymodus, insbesondere als Teil einer Inbetriebnahme der Baumaschine, kann es dagegen sinnvoll sein, wenn das Aufwärmelement bereits dann aktiviert wird, wenn noch kein Bediener innerhalb des Fahrstandes ist. Auf diese Weise kann beispielsweise eine Art Vorwärmzeit ausgenutzt werden. Die Steuerung des Betriebszustandes des Aufwärmelementes kann weiter ergänzend oder alternativ auch abhängig von einem Ladezustand einer Batterie (state of charge) erfolgen. Ist die Batterie nur schwach geladen oder unterschreitet der aktuelle Ladezustand der Batterie eine Ladeschwelle, kann es zu Energiesparzwecken vorgesehen sein, dass das Aufwärmelement deaktiviert wird und umgekehrt. Die Steuerung des Betriebszustandes des Aufwärmelementes kann weiter ergänzend oder alternativ auch abhängig von einer Außentemperatur erfolgen. Dazu kann die Baumaschinen einen Außentemperatursensor bzw. einen Umgebungstemperatursensor umfassen. Ist die Außentemperatur beispielsweise oberhalb einer definierten Schwellentemperatur, kann die Steuereinheit nun derart ausgebildet sein, dass eine Aktivierung des Aufwärmelementes von der Steuereinheit permanent unterbunden wird. Ergänzend oder alternativ kann die Steuereinheit derart ausgebildet sein, dass sie bei einem Unterschreiten eines Schwellenwertes durch die Außenumgebungstemperatur eine Aktivierung des Aufwärmelementes selbsttätig vornimmt, insbesondere dann, wenn die Baumaschine in Betrieb genommen wird. Selbstverständlich ist es zudem ergänzend oder alternativ möglich, dass die Aufwärmeinrichtung derart ausgebildet ist, dass sie manuell durch den innerhalb der Fahrstandes befindlichen Bediener aktiviert und/oder deaktiviert werden kann.

Ein Aufwärmelement kann ein oder mehrere Aufwärmfelder umfassen. Sofern ein Aufwärmelement gleichzeitig mehrere Aufwärmfelder aufweist, kann es vorgesehen sein, dass diese entweder alle gemeinsam aktivierbar und/oder deaktivierbar oder einzeln oder getrennt aktivierbar und deaktivierbar sind und/oder auf zueinander verschiedene Solltemperaturen einstellbar sind.

Es kann insbesondere vorgesehen sein, dass im Bereich eines oder mehrerer Aufwärmfelder selbst eine Bedienelement angeordnet ist, über das die Heizeinrichtung des jeweiligen Aufwärmfeldes aktivierbar und/oder deaktivierbar ist. Ergänzend oder alternativ können auch ein oder mehrere Sensoren im Bereich des einen oder der mehreren Aufwärmfelder angeordnet sein, beispielsweise in Form eines oder mehrerer Drucksensoren, die zur Erfassung eines auf dem jeweiligen Aufwärmfeld aufliegenden und/oder anliegenden Körperteils, wie beispielsweise einer Hand, ausgebildet sind.

Hinsichtlich der Art der selbstfahrenden Baumaschine bestehen verschiedene Möglichkeiten. Die vorliegende Erfindung eignet sich aber ganz besonders für Straßenbaumaschinen, insbesondere für Straßenfräsen, Straßenfertiger, Beschicker oder Straßenwalzen.

Die Erfindung wird nachstehend anhand der in den Figuren gezeigten Ausführungsbeispiele näher erläutert. Es zeigen schematisch:
- Fig. 1: eine Baumaschine vom Typ Straßenfräse als Beispiel einer Straßenbaumaschine;
- Fig. 2: eine Baumaschine vom Typ Straßenwalze als Beispiel einer Straßenbaumaschine;
- Fig. 3: eine Baumaschine vom Typ Straßenfertiger als Beispiel einer Straßenbaumaschine;
- Fig. 4: eine Draufsicht auf ein Ausführungsbeispiel eines kabinenlosen Fahrstandes;
- Fig. 5: eine Draufsicht auf ein weiteres Ausführungsbeispiel eines kabinenlosen Fahrstandes;
- Fig. 6: eine Querschnittsansicht durch ein Ausführungsbeispiel eines in einem Fahrstand angeordneten mehrschichtigen Aufwärmelementes;
- Fig. 7: eine Querschnittsansicht durch ein weiteres Ausführungsbeispiel eines in einem Fahrstand angeordneten mehrschichtigen Aufwärmelementes;
- Fig. 8: eine perspektivische Schrägansicht auf ein Aufwärmfach/eine Aufwärmmulde; und
- Fig. 9: eine perspektivische Ansicht auf ein Aufwärmelement in Form eines Aufwärmmoduls.

Gleiche beziehungsweise gleich wirkende Bauteile sind in den Figuren mit den gleichen Bezugszeichen bezeichnet. Sich wiederholende Bauteile sind nicht notwendigerweise in jeder Figur gesondert bezeichnet.

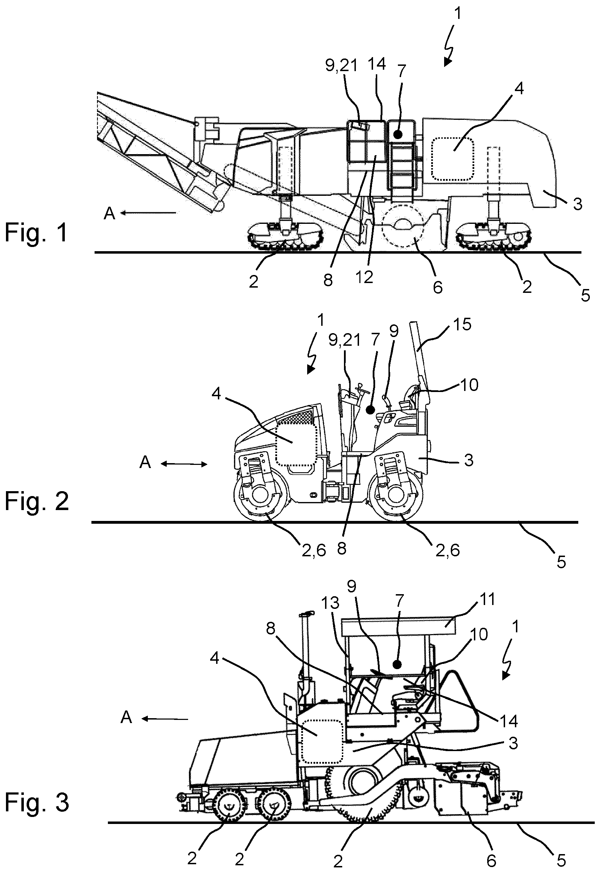

Die Figuren 1 bis 3 zeigen Seitenansichten verschiedener exemplarischer selbstfahrender Baumaschinen 1. Die Baumaschinen 1 können jeweils einen von Fahreinrichtungen 2 getragenen Maschinenrahmen 3 umfassen, der die wesentliche Tragstruktur der Baumaschine 1 bilden kann. Die Baumaschinen 1 können selbstfahrend ausgebildet sein und dazu ein oder mehrere Primärantriebsaggregate 4, wie beispielsweise einen Verbrennungsmotor und/oder einen Elektromotor, aufweisen, über das oder die die für den Fahr- und Arbeitsbetrieb der Baumaschine 1 erforderliche Antriebsenergie bereitgestellt wird. Die Baumaschinen 1, bei denen es sich vorliegend beispielsweise um Straßenbaumaschinen handeln kann, können sich im Arbeitsbetrieb in eine Arbeitsrichtung A somit aus eigenem Antrieb über den Bodenuntergrund 5 bewegen und diesen dabei bearbeiten.

Dazu können die Baumaschinen 1 eine oder mehrere Arbeitseinrichtungen 6 bzw. Bodenbearbeitungseinrichtungen aufweisen. Im Fall der als Straßenfräse ausgebildeten Baumaschine 1 gemäß Fig. 1 kann dies beispielsweise eine Fräseinrichtung sein. Im Fall der als Tandemwalze ausgebildeten Baumaschine 1 gemäß Fig. 2 können dies die als Walzbandagen ausgebildeten Fahreinrichtungen 2 selbst und/oder in der Figur nicht gezeigte Schwingungserregungseinrichtungen sein. Für die als Straßenfertiger ausgebildete Baumaschine 1 gemäß der Fig. 3 kann dies beispielsweise eine Einbaubohle sein.

Zur Bedienung der Baumaschine 1 kann diese einen Fahrstand 7 aufweisen. Dieser ist als ein sogenannter offener Fahrstand 7 bzw. als ein kabinenloser Fahrstand 7 ausgebildet. Dies bedeutet, dass er neben einem Fahrstandboden 8 eine oder mehrere Bedieneinrichtungen 9 und/oder einen oder mehrere Fahrersitze 10 aufweisen kann. Es können von dem kabinenlosen Fahrstand 7 auch ein Wetterschutzdach 11 und/oder eine oder mehrere Seitenwände 12 und/oder eine Frontscheibe 13 und/oder eine Heckscheibe (in den Figuren nicht gezeigt) umfasst sein. Trotz der optional vorhandenen Wetterschutzeinrichtungen ist der Fahrstand 7 allerdings wenigstens teilweise offen zur Außenumgebung hin ausgebildet, so dass ein innerhalb des Fahrstandes 7 befindlicher Fahrer auch immer zu einem gewissen Maß den klimatischen Außenumgebungsbedingungen, insbesondere der Außenumgebungstemperatur, direkt ausgesetzt ist.

Teil des Fahrstandes 7 können ferner ein oder mehrere Sturzsicherungen 14 sein, insbesondere in Form eines oder mehrerer Geländer oder vergleichbarer Einrichtungen zur Sturzsicherung. Es kann ergänzend oder alternativ auch eine ROPS-Struktur 15 *(roll over protection structure)* von dem Fahrstand 7 mit umfasst sein.

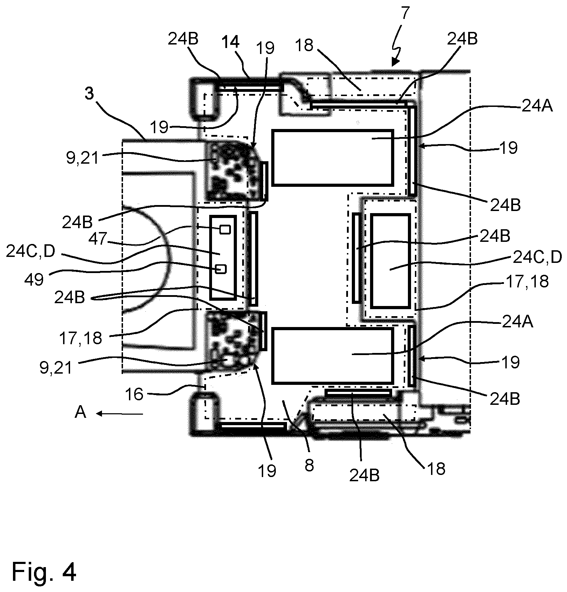

Fig. 4 veranschaulicht in einer Draufsicht Elemente eines Fahrstandes 7. Die für den Fahrstand 7 angegebenen Merkmale können jeweils für sich oder auch in Unterkombination miteinander auf eine der in den Figuren 1 bis 3 gezeigten Baumaschinen 1 oder auch auf andere Baumaschinen 1 übertragen werden.

Der Fahrstandboden 8 des Fahrstandes 7 umfasst eine Aufstandsoberfläche 16. Diese bezeichnet somit denjenigen Teil des Fahrstandbodens 8 bzw. von dessen Außenoberfläche, auf der sich ein innerhalb des Fahrstandes 7 befindlicher Bediener aufhalten bzw. auf der dieser während eines Bedienens der Baumaschine 1 aufstehen kann bzw. aufsteht.

Der Fahrstand 7 umfasst ferner eine oder mehrere Handauflageoberflächen 17. Die Handauflageoberflächen 17 bezeichnen Außenoberflächen, auf die der innerhalb des Fahrstandes 7 befindliche Bediener im laufenden Fahr- und Arbeitsbetrieb seine Hand ablegen und/oder abstützen kann. Derartige Handauflageoberflächen 17 können nah bei einem oder mehreren der Bedieneinrichtungen 9 positioniert sein.

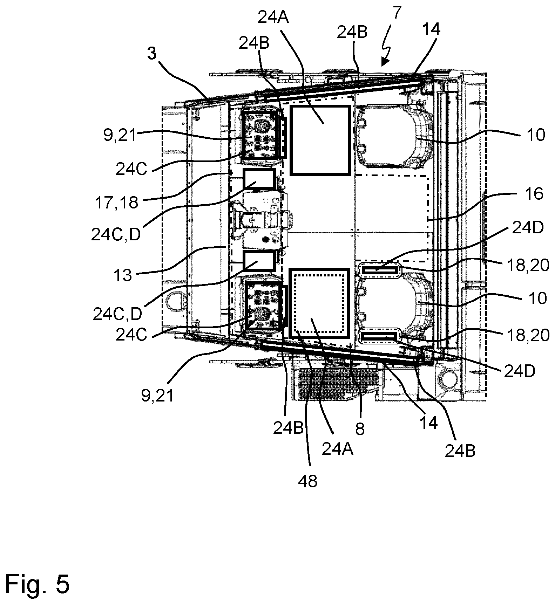

Der Fahrstand 7 kann ferner eine oder mehrere Armauflageoberflächen 18 umfassen. Diese bezeichnen Außenoberflächen des Fahrstandes 7, auf die der innerhalb des Fahrstandes 7 befindliche Bediener im laufenden Fahr- und Arbeitsbetrieb seinen Arm, insbesondere seinen Unterarm, ablegen und/oder abstützen kann. Diese können beispielsweise von einer oder mehreren Armlehnen 20 eines Fahrersitzes 10 (Fig. 5; in der Figur der untere Fahrersitz 10) gebildet werden. Ergänzend oder alternativ können eine oder mehrere der Handauflageoberflächen 17 beispielsweise auch derart ausgebildet sein, beispielsweise hinsichtlich ihrer Größe und/oder Lage, dass sie sich auch zur Auflage eines Arms, insbesondere zumindest eines Unterarms, eignen.

Sowohl die Handauflageoberflächen 17 als auch die Armauflageflächen 18 können insbesondere derart ausgebildet sein, dass sie im Wesentlichen horizontal verlaufen bzw. sich, zumindest im Wesentlichen, in einer Horizontalebene erstrecken.

Vom Fahrstand 7 können ergänzend oder alternativ schließlich eine oder mehrere Anlehnoberflächen 19 umfasst sein. Diese bezeichnen Außenoberflächen des Fahrstandes 7, an die sich der innerhalb des Fahrstandes befindliche Bediener, insbesondere in einer Stehposition, anlehnen kann.

Die Anlehnoberflächen 19 können insbesondere derart ausgebildet sein, dass sie, zumindest im Wesentlichen, vertikal verlaufen bzw. sich in einer Vertikalebene erstrecken.

Fig. 5 veranschaulicht in einer weiteren Ausführungsform eines Fahrstandes 7, dass dieser auch ein oder mehrere Fahrersitze 10 umfassen kann. Die Sitzfläche 21 des Fahrersitzes 10 liegt außerhalb der Aufstandsoberfläche 16, der Handauflageoberfläche 17, der Armauflageoberfläche 18 und der Anlehnoberfläche 19. Allerdings kann der Fahrersitz 10 eine oder mehrere Armlehnen 20 aufweisen. Deren, insbesondere in Vertikalrichtung obere, Außenoberfläche kann insbesondere eine Armauflagefläche 18 sein.

Die Bedieneinrichtungen 9 können beispielsweise als Bedienpult 21 (Figuren 1, 2, 4 und 5), insbesondere umfassend mehrere einzelne Bedienelemente, als Lenkrad, als Joystick oder ähnliches ausgebildet sein. Die Bedieneinrichtungen 9 können beispielsweise auch in eine Armlehne integriert sein. Es können mehrere, insbesondere räumlich zueinander getrennte, Bedienpulte 21 im Fahrstand 7 vorgesehen sein, wie beispielsweise in den Figuren 4 und 5 veranschaulicht. Die Bedienpulte 21 können verstellbar sein, beispielsweise linear verschiebbar und/oder rotierbar und/oder umsteckbar.

Der Fahrstand 7 der verschiedenen Ausführungsformen umfasst ein oder mehrere Aufwärmelemente 22. Die Aufgabe der Aufwärmelemente 22 besteht darin, bestimmte Oberflächenbereiche der Aufstandsoberfläche 16 und/oder der Handauflageoberfläche 17 und/oder der Armauflageoberfläche 18 und/oder der Anlehnoberfläche 19 des Fahrstandes 7 zu erwärmen. Diese kann der Bediener somit berühren und sich dadurch teilweise aufwärmen.

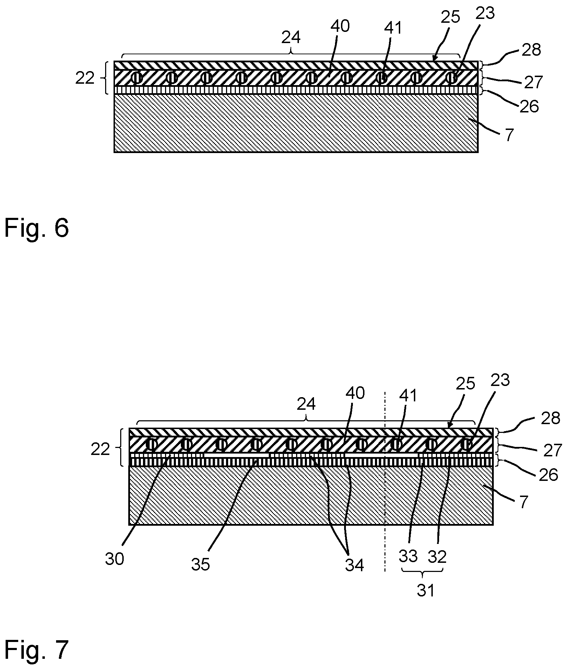

Mögliche Aufbaualternativen eines solchen Aufwärmelementes 22 sind in den Figuren 6 und 7 beispielhaft näher veranschaulicht. Das Aufwärmelement 22 bezeichnet somit eine Einrichtung, die zum Erzeugen von Wärme ausgebildet ist und die die erzeugte Wärme einer Außenoberfläche von einem die Wärme erzeugenden Element, insbesondere ausschließlich, mittels konduktiver Wärmeübertragung zuführt. Diese dann erwärmte Außenoberfläche, die gezielt im Bereich der Aufstandsoberfläche 16 und/oder der Handauflageoberfläche 17 und/oder der Armauflageoberfläche 18 und/oder der Anlehnoberfläche 19 des Fahrstandes 7 positioniert wird, kann der innerhalb des Fahrstandes 7 befindliche Bediener berühren bzw. kontaktieren und auf diese Weise insbesondere die berührenden Körperregionen erwärmen.

Teile des Aufwärmelementes 22 können eine Heizeinrichtung 23 und ein Aufwärmfeld 24 mit einer Außenoberfläche 25 sein. Das oder die Aufwärmelemente 22 können derart innerhalb des Fahrstandes 7 angeordnet sein, dass die Außenoberfläche 25 des oder der Aufwärmelemente 22 Oberflächenbereiche der Aufstandsoberfläche 16 und/oder der Handauflageoberfläche 17 und/oder der Armauflageoberfläche 18 und/oder der Anlehnoberfläche 19 des Fahrstandes 7 bilden. In den Figuren 6 und 7 ist dazu der Fahrstand 7 als entsprechende Tragstruktur des oder der Aufwärmelemente 22 bezeichnet.

Ein Aufwärmelement 22 kann mehrschichtig aufgebaut sein und dazu beispielswiese eine Verbindungsschicht 26, eine Heizschicht 27 und eine Wärmschicht 28 aufweisen.

Die Aufgabe der Verbindungsschicht 26 besteht darin, eine Verbindung des jeweiligen Aufwärmelementes 22 mit einem Befestigungs- und/oder Anlagebereich der übrigen Baumaschine 1 herzustellen. Dazu kann die Verbindungsschicht 26 beispielweise als Klebschicht 29 ausgebildet sein, wie in der Fig. 6 veranschaulicht. Ergänzend oder alternativ ist es auch möglich, die Verbindungsschicht 26 beispielsweise als zerstörungsfrei lösbare Verbindungsschicht 26 auszubilden, wie in der Fig. 7 näher veranschaulicht. Dies kann beispielsweise dadurch erreicht werden, dass die Verbindungsschicht als Magnetverbindung 34 mit einem oder mehreren permanentmagnetischen Magnetelementen 30 und einer magnetischen Gegenanlagefläche 35 ausgebildet ist. Ergänzend oder alternativ kann es auch vorgesehen sein, dass die Verbindungsschicht als Klettverbindung 31mit einer Haftseite 32 und einer Flauschseite 33 ausgebildet ist.

Die Heizschicht 27 ist diejenige Schicht, in der die konduktiv zu übertragende Wärme erzeugt wird. Dazu kann die Heizschicht beispielsweise mehrere stromdurchflossene Heizdrähte oder ähnliches aufweisen. Insbesondere kann die Heizschicht 27 derart ausgebildet sein, dass in ihr elektrische Energie in Wärmeenergie umgewandelt wird.

Die Wärmschicht 28 stellt diejenige Schicht dar, in der die in der Heizschicht 27 erzeugte Wärme zu der Außenoberfläche des Aufwärmelementes 22 konduktiv transportiert wird. Die Wärmschicht 28 bzw. Kontaktschicht kann auch als eine gemeinsame Schicht mit der Heizschicht 27 ausgebildet sein. Wesentlich kann somit sein, dass innerhalb des Aufwärmelementes 22 von der Heizeinrichtung erzeugte Wärme insbesondere direkt und ausschließlich durch einen konduktiven Wärmetransport bis hin zur die Aufwärmfläche bildenden Außenoberfläche des Aufwärmelementes 22 erfolgt.

Es können ein oder mehrere Aufwärmelemente 22 innerhalb eines Fahrstandes 7 angeordnet sein. In den Figuren 4 und 5 sind dazu die jeweiligen Aufwärmfelder 24 einer oder mehrerer Aufwärmelemente 22 angegeben.

Mit 24A sind beispielsweise Aufwärmfelder 24 bezeichnet, die einen Teil der Aufstandsoberfläche 16 des jeweiligen Fahrstandes bilden. Diese können somit beispielsweise insbesondere in einem bezüglich der Arbeitsrichtung A rechten und/oder linken Randbereich des Fahrstandbodens 8 liegen und/oder in Arbeitsrichtung A vor einem Fahrersitz 10.

Mit 24B sind ergänzend oder alternativ innerhalb der Fahrstandes 7 vorhandene Aufwärmfelder 24 bezeichnet, die einen Teil der Anlehnoberfläche 19 bilden können. Diese können beispielsweise in eine Sturzsicherung 14 oder auch beispielsweise in einem in einer Projektion des Fahrstandes in einer horizontale Ebene an ein oder mehrere Bedieneinrichtungen 9 anschließenden Bereich, beispielsweise in Vertikalrichtung unterhalb der jeweiligen Bedieneinrichtung 9, so dass sich ein über die Sturzsicherung 14 lehnender und/oder ein sich vor einer Bedieneinrichtung 9 befindlicher Bediener bequem in einer Bedienposition wenigstens teilweise an ein oder mehrere solcher Aufwärmfelder 24 anlehnen kann, integriert und/oder mit dieser verbunden sein.

Mit 24C sind ergänzend oder alternativ innerhalb der Fahrstandes 7 vorhandene Aufwärmfelder 24 bezeichnet, die einen Teil der Handauflageoberfläche 17 bilden. Dies können insbesondere Bereiche der Außenoberfläche des Fahrstandes 7 sein, die ungefähr auf Höhe eines oder mehrerer Bedieneinrichtungen 9 liegen und in einer Projektion des Fahrstandes 7 in eine virtuelle horizontale Referenzebene neben und insbesondere an eine oder mehrere Bedieneinrichtungen 9, ganz besonders unmittelbar, angrenzen.

Mit 24D sind ergänzend oder alternativ innerhalb des Fahrstandes 7 vorhandene Aufwärmfelder 24 bezeichnet, die einen Teil der Armauflageoberfläche 18 bilden. Diese können insbesondere beispielsweise einen Teil der in Vertikalrichtung obenliegenden Außenoberfläche einer oder mehrerer Armlehnen 20 bilden.

Es können Oberflächenbereiche vorgesehen sein, die sowohl zur Hand- und Armauflage geeignet sind. Diese sind mit 24C,D bezeichnet.

Speziell für die Fläche eines oder mehrerer der Bedienpulte 21 kann es jedoch vorgesehen sein, dass die Grundfläche der jeweiligen Bedienpulte 21, auf der die mehreren Bedienelemente des jeweiligen Bedienpultes 21 angeordnet sind, ebenfalls wenigstens teilweise als Aufwärmfeld 24, insbesondere als Aufwärmfeld 24C, ausgebildet ist (nicht notwendigerweise das oder die Bedienelemente selbst, was wiederum mit einem erhöhten konstruktiven Aufwand einhergeht).

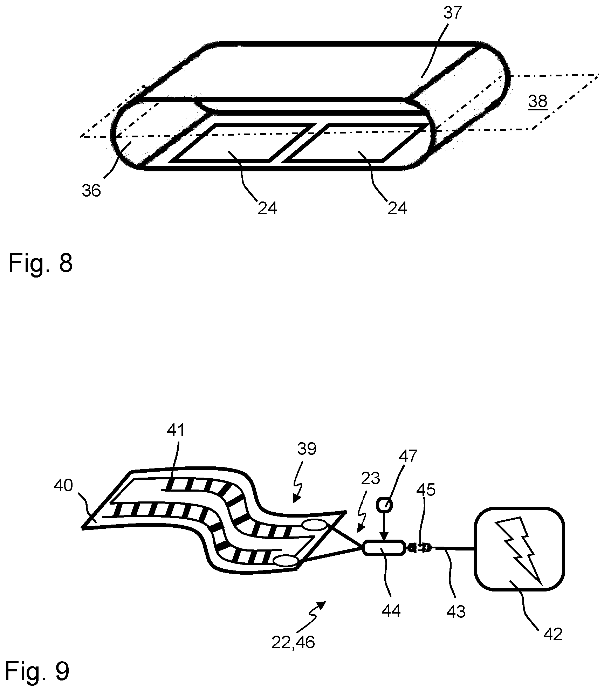

Fig. 8 veranschaulicht eine weitere Variante zur Anordnung und Ausbildung des Aufwärmfeldes 24. So kann es beispielsweise vorgesehen sein, dass im Fahrstand 7 ein Aufwärmfach 37 oder einer Aufwärmmulde 36 vorhanden ist. Das Aufwärmfach 37 zeichnet sich dadurch aus, dass es einen Fachinnenraum umgibt und wenigstens eine Öffnung aufweist. Innerhalb des Fachinnenraums können ein oder mehrere Aufwärmfelder 24 vorgesehen sein. Durch die Öffnung hindurch kann ein innerhalb des Fahrstandes 7 befindlicher Bediener somit insbesondere eine oder beide Hände in den Fachinnenraum einbringen und dadurch seine Hände in einer windgeschützten Umgebung aufwärmen. In Vertikalrichtung gesehen können ein oder mehrere solcher Aufwärmfächer 37, insbesondere unterhalb einer oder mehrerer der Bedieneinrichtungen 9, innerhalb des Fahrstandes 7 angeordnet werden. Anstelle der den Fachinnenraum umlaufend eingehausten Ausführung des Aufwärmfaches 37 kann dieses auch als in Vertikalrichtung nach unten erstreckte Vertiefung bzw. Aufwärmmulde 36 ausgebildet werden. Dies ist in der Fig. 8 durch die angedeutete Schnittebene 38 angegeben. Derjenige Teil des Aufwärmfaches 37, der unterhalb der Schnittebene 38 liegt, bildet eine Aufwärmmulde 36.

Das Aufwärmelement 22 kann wenigstens teilweise insbesondere als Folienelement 39 ausgebildet sein, was in der Fig. 9 näher veranschaulicht ist. Insbesondere kann das Aufwärmfeld 24 als ein, vorzugsweise zerstörungsfrei dreidimensional verformbares, Folienelement 39 ausgebildet sein und auf diese Weise sehr gut flächig innerhalb eines Fahrstandes 7 anordenbar sein. Das Folienelement 39 kann dazu insbesondere die Heizschicht 27 und die Wärmschicht 28, optional wenigstens teilweise auch die Verbindungsschicht 26, aufweisen.

Gemäß den Figuren 5, 6 und 9 kann das Aufwärmelement 22 als Teil der Heizeinrichtung 23 in einem Grundmaterial 40 eingebettete Metalldrähte 41 aufweisen. Die Heizeinrichtung 23 kann ferner als elektrische Heizeinrichtung ausgebildet sein und ergänzend zu beispielsweise den Metalldrähten 41 eine elektrische Energieversorgung 42 aufweisen. Die Metalldrähte 41 können als Heizdrähte ausgebildet sein und somit bei einem Anschluss an eine elektrische Energieversorgung elektrische Energie in Wärme umsetzen. Hierbei kann es sich beispielsweise um eine Verbindung bzw. einen Anschluss an ein Bordnetz der Baumaschine 1 handeln und/oder um einen elektrischen Energiespeicher, beispielsweise eine Batterie. Die elektrische Energieversorgung 42 kann über eine Energieübertragungsverbindung 43 mit den Metalldrähten 41 verbunden sein. Die Energieübertragungsverbindung 43 kann eine lösbare Steckverbindung 45 umfassen.

Das Aufwärmelement 22 kann eine Steuereinheit 44 aufweisen. Die Steuereinheit 44 kann beispielsweise derart ausgebildet sein, dass sie die Erwärmung des Aufwärmfeldes 24 hin zu einer vorgegebenen Temperatur steuert bzw. regelt. Ergänzend oder alternativ ist es auch möglich, dass das Aufwärmelement 22 ein Bedienelement 47 aufweist, über das Bedien- und/oder Steuervorgaben, wie beispielsweise eine Solltemperatur, eine Aktivierung und/oder Deaktivierung des Aufwärmelementes, eine Zeitschaltuhrfunktion und/oder Timerfunktion etc., von einem Bediener eingegeben und an die Steuereinheit 44 übermittelt werden können. Es ist möglich, dass Bedienelement 47 unmittelbar innerhalb der Fläche eines Aufwärmfeldes 24 anzuordnen.

Insgesamt kann das Aufwärmelement 22 als Aufwärmmodul 46 ausgebildet sein und auf diese Weise beispielsweise auch gut nachgerüstet werden und/oder von der übrigen Baumaschine 1 vollständig unabhängig betrieben werden.

Um einem innerhalb des Fahrstandes 7 befindlichen Bediener das Auffinden "erwärmter" Außenoberflächen bzw. des Aufwärmfeldes oder der Aufwärmfelder 24 zu erleichtern, kann es vorgesehen sein, dass diese bzw. deren Außenoberfläche mithilfe einer Markierung 48 gekennzeichnet ist. Dies kann eine visuell wahrnehmbare Markierung, wie beispielsweise eine Farbmarkierung, und/oder eine taktil wahrnehmbare Markierung, wie beispielsweise eine Oberflächenstruktur oder ähnliches, sein.

Unabhängig von den konkreten Ausführungsbeispielen kann es ergänzend oder alternativ auch vorgesehen sein, dass eine Indikatoreinrichtung 49 vorhanden ist. Hierbei kann es sich beispielsweise um eine visuell wahrnehmbare Anzeige handeln, insbesondere eine oder mehrere LEDs. Die Indikatoreinrichtung 49 kann dazu ausgebildet sein, einen Betriebszustand des Aufwärmelementes 22 anzuzeigen, beispielsweise ob dieses aktuell aktiviert und/oder deaktiviert ist und/oder eine definierte Solltemperatur erreicht hat oder noch nicht. Hinsichtlich der konkreten Anordnung kann es vorgesehen sein, die Indikatoreinrichtung 49 innerhalb eines oder mehrerer der Aufwärmfelder 24 anzuordnen oder auch außerhalb davon.

### BEZUGSZEICHENLISTE

- 1: Baumaschine
- 2: Fahreinrichtungen
- 3: Maschinenrahmen
- 4: Primärantriebsaggregat
- 5: Bodenuntergrund
- 6: Arbeitseinrichtung
- 7: Fahrstand
- 8: Fahrstandboden
- 9: Bedieneinrichtung
- 10: Fahrersitz
- 11: Wetterschutzdach
- 12: Seitenwand
- 13: Frontscheibe
- 14: Sturzsicherung
- 15: ROPS-Struktur
- 16: Aufstandsoberfläche
- 17: Handauflageoberfläche
- 18: Armauflageoberfläche
- 19: Anlehnoberfläche
- 20: Armlehne
- 21: Bedienpult
- 22: Aufwärmelement
- 23: Heizeinrichtung
- 24: Aufwärmfeld
- 25: Außenoberfläche des Aufwärmfeldes
- 26: Verbindungsschicht
- 27: Heizschicht
- 28: Wärmschicht
- 29: Klebschicht
- 30: Magnetelement
- 31: Klettverbindung
- 32: Haftseite
- 33: Flauschseite
- 34: Magnetverbindung
- 35: magnetische Gegenanlagefläche
- 36: Aufwärmmulde
- 37: Aufwärmfach
- 38: Schnittebene
- 39: Folienelement
- 40: Grundmaterial
- 41: Metalldrähte
- 42: elektrische Energieversorgung
- 43: Energieübertragungsverbindung
- 44: Steuereinheit
- 45: lösbare Steckverbindung
- 46: Aufwärmmodul
- 47: Bedienelement
- 48: Markierung
- 49: Indikatoreinrichtung
- A: Arbeitsrichtung

## Patentansprüche

1. Selbstfahrende Baumaschine (1), insbesondere Straßenbaumaschine, mit einem kabinenlosen Fahrstand (7), der Fahrstand (7) umfassend
- wenigstens einen Fahrstandboden (8) mit einer Aufstandsoberfläche (16),
- wenigstens eine Bedieneinrichtung (9) zur Eingabe von Steuervorgaben durch einen innerhalb des Fahrstandes (7) befindlichen Bediener und
- wenigstens eine oder mehrere Hand- und/oder Armauflageoberflächen (17, 18) und/oder Anlehnoberflächen (19),
**dadurch gekennzeichnet,**
**dass** ein Aufwärmelement (22) vorhanden ist, welches wenigstens eine Heizeinrichtung (23) und ein mittels konduktiver Wärmeübertragung von der Heizeinrichtung (23) erwärmbares Aufwärmfeld (24) umfasst, wobei das wenigstens eine Aufwärmfeld (24) mit seiner Außenoberfläche wenigstens einen Teil der Hand- und/oder Armauflageoberflächen (17, 18) und/oder der Aufstandsoberfläche (16) und/oder einer Anlehnfläche (19) innerhalb des Fahrstandes (7) bildet.

2. Selbstfahrende Baumaschine (1) gemäß Anspruch 1,
**dadurch gekennzeichnet,**
**dass** die Heizeinrichtung (23) eine elektrische Heizeinrichtung ist und eine elektrische Energieversorgung (42) von der Baumaschine (1) umfasst ist, die die Heizeinrichtung (23) mit elektrischer Energie versorgt.

3. Selbstfahrende Baumaschine (1) gemäß einem der vorhergehenden Ansprüche,
**dadurch gekennzeichnet,**
**dass** die Heizeinrichtung (23) oder das Aufwärmelement (22) insgesamt als Folienelement (39) ausgebildet ist.

4. Selbstfahrende Baumaschine (1) gemäß einem der vorhergehenden Ansprüche,
**dadurch gekennzeichnet,**
**dass** das Aufwärmelement (22) mehrschichtig aufgebaut ist und eine die Außenoberfläche bildende Wärmschicht (28), eine darunter verlaufende Heizschicht (27) und einer darunter verlaufende Verbindungsschicht (26) aufweist.

5. Selbstfahrende Baumaschine (1) gemäß Anspruch 4,
**dadurch gekennzeichnet,**
**dass** das Aufwärmelement (22) wenigstens eines der folgenden Merkmale aufweist:
- die Wärmschicht (28) besteht aus einem, insbesondere elastisch verformbaren, Kunststoffmaterial besteht;
- die Heizschicht (27) umfasst ein Grundmaterial (40), in das mehrere Metalldrähte (41), insbesondere einer elektrischen Heizeinrichtung (23), eingebettet sind;
- die Verbindungsschicht (26) weist wenigstens eines der folgenden Merkmale auf:
- Sie ist als Haftseite (32) oder als Flauschseite (33) einer Klettverbindung ausgebildet;
- sie umfasst ein oder mehrere Magnetelemente (30) aus einem permanentmagnetischen Material oder magnetischen Material.
- sie ist als Klebschicht (29) ausgebildet.

6. Selbstfahrende Baumaschine (1) gemäß einem der vorhergehenden Ansprüche,
**dadurch gekennzeichnet,**
**dass** das Aufwärmelement (22) als separat zur übrigen Baumaschine (1) handhabbares Aufwärmmodul (46) ausgebildet ist, wobei eine lösbare Steckverbindung (45) von der Baumaschine (1) umfasst ist, die zur Herstellung einer Energieübertragungsverbindung (43) von einem Bordnetz der Baumaschine (1) zum Aufwärmelement (22) ausgebildet ist.

7. Selbstfahrende Baumaschine (1) gemäß einem der vorhergehenden Ansprüche,
**dadurch gekennzeichnet,**
**dass** das wenigstens eine Aufwärmfeld (24) hinsichtlich seiner Außenoberfläche eben oder gekrümmt ausgebildet ist.

8. Selbstfahrende Baumaschine (1) gemäß einem der vorhergehenden Ansprüche,
**dadurch gekennzeichnet,**
**dass** das Aufwärmfeld (24) des Aufwärmelementes (22) Teil einer Außenoberfläche einer Aufwärmmulde (36) und/oder eines Aufwärmfachs (37) ist.

9. Selbstfahrende Baumaschine (1) gemäß einem der vorhergehenden Ansprüche,
**dadurch gekennzeichnet,**
**dass** die Bedieneinrichtung (9) ein Bedienpult (21) ist, und dass ein Teil einer Außenoberfläche des Bedienpultes (21) von der Außenoberfläche des Aufwärmelementes (22) gebildet wird.

10. Selbstfahrende Baumaschine (1) gemäß einem der vorhergehenden Ansprüche,
**dadurch gekennzeichnet,**
**dass** eine den Fahrstand (7) begrenzende Sturzsicherung (14) vorhanden ist, und dass ein Teil einer dem Fahrstand (7) zugewandten Außenoberfläche der Sturzsicherung (14) von der Außenoberfläche des Aufwärmelementes (22) gebildet.

11. Selbstfahrende Baumaschine (1) gemäß einem der vorhergehenden Ansprüche,
**dadurch gekennzeichnet,**
**dass** ein Fahrersitz (10) innerhalb des Fahrstandes (7) angeordnet ist, wobei der Fahrersitz (10) wenigstens eine Hand- und/oder Armauflageeinrichtung (20) umfasst, und wobei ein Teil einer in Vertikalrichtung oben liegenden Außenoberfläche der Hand- und/oder Armauflageeinrichtung (20) von der Außenoberfläche des Aufwärmelementes (22) gebildet wird.

12. Selbstfahrende Baumaschine (1) gemäß einem der vorhergehenden Ansprüche,
**dadurch gekennzeichnet,**
**dass** das wenigstens eine Aufwärmfeld (24) eine visuell oder taktil wahrnehmbare Markierung (48) aufweist und/oder .

13. Selbstfahrende Baumaschine (1) gemäß einem der vorhergehenden Ansprüche,
**dadurch gekennzeichnet,**
**dass** das Aufwärmelement (22) derart ausgebildet ist, dass eine Solltemperatur des Aufwärmelementes (22) schrittweise oder stufenlose verstellbar ist, und/oder mehrere Aufwärmfelder (24) aufweist, wobei die mehreren Aufwärmfelder (24) insbesondere einzeln oder getrennt aktivierbar und deaktivierbar sind und/oder auf zueinander verschiedene Solltemperaturen einstellbar sind.

14. Selbstfahrende Baumaschine (1) gemäß einem der vorhergehenden Ansprüche,
**dadurch gekennzeichnet,**
**dass** eine Steuereinheit (44) vorhanden ist, die wenigstens eines der folgenden Merkmale aufweist:
- sie regelt die Temperatur des Aufwärmelementes (22) in Abhängigkeit von einer vorgegebenen Solltemperatur;
- sie regelt die Temperatur des Aufwärmelementes (22) in Abhängigkeit von einer durch den Bediener vorgegebenen und variierbaren Solltemperatur;
- sie regelt die Temperatur des Aufwärmelementes (22) in Abhängigkeit von einem Betriebs- und/oder Umgebungsparameter der Baumaschine (1).

15. Selbstfahrende Baumaschine (1) gemäß einem der vorhergehenden Ansprüche,
**dadurch gekennzeichnet,**
**dass** im Bereich eines oder mehrerer Aufwärmfelder (24) selbst ein Bedienelement (47) angeordnet ist, über das die Heizeinrichtung (23) des jeweiligen Aufwärmfeldes (24) aktivierbar und/oder deaktivierbar ist.
